Europäisches Patentamt

European Patent Office

Office européen des brevets

(11) Veröffentlichungsnummer: **0 481 206 A1**

# EUROPÄISCHE PATENTANMELDUNG

(21) Anmeldenummer: **91115055.5**

(51) Int. Cl.⁵: **B30B 15/10**, F16D 67/04

(22) Anmeldetag: **06.09.91**

(30) Priorität: **18.10.90 DE 9014424 U**

(43) Veröffentlichungstag der Anmeldung:
**22.04.92 Patentblatt 92/17**

(84) Benannte Vertragsstaaten:
**DE ES FR GB IT**

(71) Anmelder: **Ortlinghaus-Werke GmbH
Kenkhauser Strasse 125
W-5632 Wermelskirchen(DE)**

(72) Erfinder: **Mombré, Karl Wilhelm, Dipl.Ing.
Luisenstrasse 30
W-5632 Wermelskirchen 1(DE)**

(74) Vertreter: **Mentzel, Norbert, Dipl.-Phys. et al
Patentanwälte Dipl.-Phys. Buse Dipl.-Phys.
Mentzel Dipl.-Ing. Ludewig Unterdörnen 114
W-5600 Wuppertal 2(DE)**

(54) **Kombinierte Kupplungs- und Bremsvorrichtung.**

(57) Die kombinierte Kupplungs- und Bremsvorrichtung wird an einer zum Betrieb einer Maschine dienenden Welle (10) angeordnet und mit einem an dieser Welle zusätzlich angreifenden Schleichgangantrieb (40) versehen. Es sind kupplungsseitige und bremsseitige Lamellen-Pakete (33, 34) vorgesehen. Auf der Welle ist drehfest, aber axial verschiebbar, ein Schaltkolben (11) gelagert, der zwischen den Kupplungs- und Bremslamellen-Paketen (33, 34) durch Druckmittelbetätigung einerseits und durch Rückstellfedern (15, 16) andererseits in zwei anpreßwirksame Endstellungen überführbar ist. Ferner ist ein Zusatzkolben (51) vorgesehen, der druckmittelbeaufschlagt ist, um über die Welle (10) den Schleichgangantrieb (40) ausüben zu können. Um eine einfache, funktionssichere und vor allem wirkungsvollere Ankupplung des Schleichgangantriebs an der Welle zu erreichen, wird vorgeschlagen, daß der Schaltkolben (11) in eine dritte, mittlere Schleichgangstellung überführbar ist, in welcher er sowohl das Kupplungs- als auch das Bremslamellen-Paket (23, 24; 33, 34) frei gibt. Dabei sind sowohl der Zusatzkolben (51) als auch der Schaltkolben (11) druckmittelbeaufschlagt (13; 46). Zwischen dem Schalt- und Zusatzkolben (11, 51) ist ein Anschlag (17, 49) angeordnet, der nur bei Druckmittelbeaufschlagung (46) des Zusatzkolbens (51) als starres Hindernis (43) in den Weg (27) des Schaltkolbens (11) hineinragt und den Schaltkolben (11) vor Erreichen der Endstellung stoppt.

EP 0 481 206 A1

Die Erfindung richtet sich auf eine Vorrichtung der im Oberbegriff des Anspruches 1 angegebenen Art. Das Typische dieser Vorrichtung besteht darin, daß die Kupplung und die Bremse mit einem in zwei Endstellungen überführbaren Schaltkolben so gekoppelt sind, daß in der einen Endstellung, nämlich der Kupplungsstellung, die Bremse geöffnet und die Kupplung geschlossen und in der anderen Endstellung, nämlich einer Bremsstellung, die Kupplung geöffnet und die Bremse geschlossen sind. Zur Umsteuerung des Schaltkolbens dient einerseits ein Druckmittel und andererseits Rückstellfedern. Diese sorgen dafür, daß der Schaltkolben in der Bremsstellung auf das Bremslamellen-Paket und in der Kupplungsstellung auf das Kupplungslamellen-Paket einwirkt. In der Vorrichtung ist ein Zusatzkolben angeordnet, der druckmittelbeaufschlagt ist, um über die Welle einen Schleichgangantrieb ausüben zu können.

Bei der bekannten Vorrichtung (DE-OS 34 24 539) wirkt die Rückstellfeder über einen Mitnehmer auf den Schaltkolben ein und der Mitnehmer ist über eine Zugstange mit dem Zusatzkolben gekoppelt. Um den Schleichgangantrieb über die Welle ausüben zu können, wird zwar nicht der Schaltkolben, wohl aber der Zusatzkolben druckmittelbeaufschlagt. Dadurch wird über die Zugstange und den Mitnehmer die Rückstellfeder zusammengeschoben, so daß sie den Schaltkolben freigibt und dieser nicht mehr das Bremslamellen-Paket belastet. Der Schaltkolben ist dann inaktiv. Der Zusatzkolben wirkt nicht mit dem Schaltkolben zusammen.

Diese bekannte Konstruktion ist konstruktiv schwierig zu verwirklichen und läßt sich nicht ohne weiteres in das bestehende System der Vorrichtung integrieren. Der Erfindung liegt die Aufgabe zugrunde, bei einer Vorrichtung der im Oberbegriff genannten Art eine konstruktiv einfache, funktionssichere und vor allem wirkungsvollere Ankoppelung des Schleichgangantriebs an die Welle zu erreichen. Dies wird erfindungsgemäß durch die im Kennzeichen des Anspruches 1 angeführten Maßnahmen erreicht, denen folgende besondere Bedeutung zukommt.

Bei der Erfindung sind im Falle des Schleichgangantriebs sowohl der Zusatzkolben als auch der Schaltkolben aktiv; beide Kolben werden druckmittelbeaufschlagt. Die beiden Kolben wirken über einen Anschlag zusammen. Der Zusatzkolben wirkt dann als starres Hindernis für die Schaltbewegung des Schaltkolbens und stoppt diesen vor Erreichen der Endstellung. Durch diesen Stopp des Schaltkolbens ist eine dritte, mittlere Stellung zwischen den beiden Endstellungen des Schaltkolbens bestimmt, in welcher sowohl das Kupplungs- als auch das Bremslamellen-Paket freigegeben sind. Diese dritte Stellung soll nachfolgend kurz "Schleichgangstellung" bezeichnet werden.

Konstruktiv am einfachsten ist es dabei, die Kolben und ihre Zylinder gemäß Anspruch 2 zueinander gegensinnig anzuordnen. Der Anschlag kann dabei entweder dem Schaltkolben oder dem Zusatzkolben zugeordnet sein und dazwischen einen axialen Spalt gemäß Anspruch 3 einschließen. Im einfachsten Fall bildet man diesen Anschlag als Stößel im Sinne des Anspruches 4 aus, welcher vorteilhafterweise zugleich die weitere Funktion gemäß Anspruch 5 für die Rückstellfedern übernehmen kann. Um Geräusche zu vermeiden, wird man das eine Stößelende kraftschlüssig am Schaltkolben nach Anspruch 6 zur Anlage bringen, wozu man wenigstens einen Teil der Rückstellfedern nutzen sollte. Das andere Stößelende kann in einer Bohrung der Vorrichtung gemäß Anspruch 7 geführt sein.

Von besonderem Vorteil ist es, den Anschlag zwischen den beiden Kolben zweiteilig auszubilden, nämlich z. B. einem Stößel einerseits und einen Führungszapfen andererseits, wie es Anspruch 8 vorschlägt. Zur genauen Einstellung der Schleichgangstellung des Schaltkolbens sollte die axiale Länge dieser Anschlagmittel gemäß Anspruch 9 einstellbar sein. Besonders einfach ist es dabei, gemäß Anspruch 10, die gleichen Druckmittel und Steuerungen für beide Kolben zu verwenden und die Druckmittelkanäle gemäß Anspruch 11 in die Welle zu integrieren.

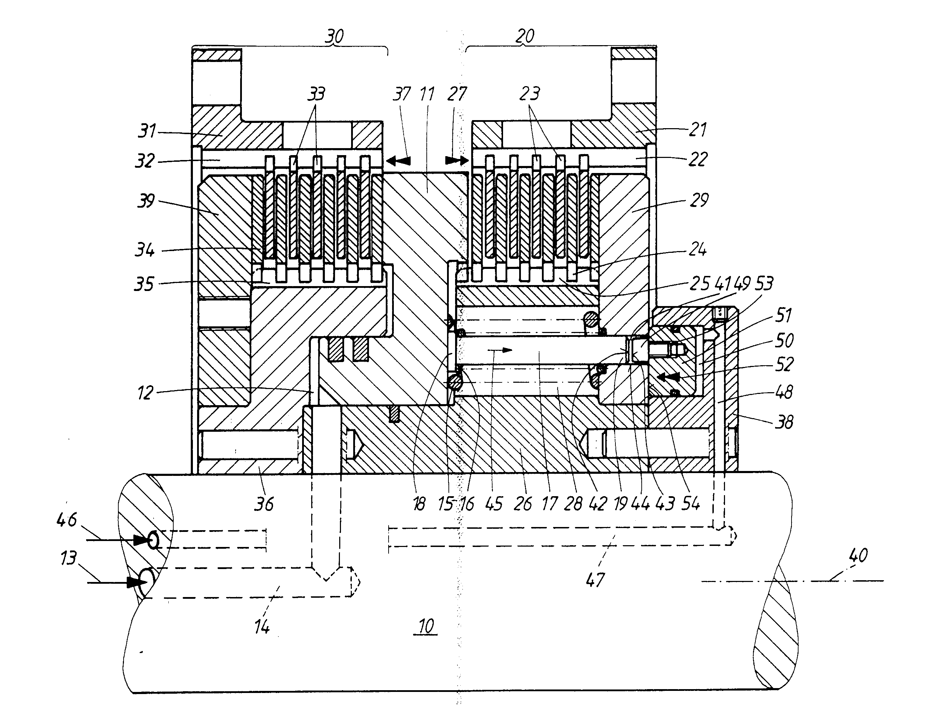

Weitere Maßnahmen und Vorteile der Erfindung ergeben sich aus den Ansprüchen, der Beschreibung und der Zeichnung. Dabei richtet sich die Erfindung auf alle daraus entnehmbaren neuen Merkmale und Merkmalskombinationen, auch wenn diese nicht ausdrücklich in den Ansprüchen angeführt sein sollten. In der Zeichnung ist die Erfindung in einem Ausführungsbeispiel dargestellt und zeigt

einen Axialschnitt durch die obere Hälfte der erfindinngsgemäßen kombinierten Kupplungs- und Bremsvorrichtung.

In einem nicht näher dargestellten Gestell einer Maschine, z. B. einer Presse od. dgl. ist eine Welle 10 gelagert und trägt ebenfalls nicht näher gezeigte Abtriebsmittel, z. B. Zahnräder. Um die Welle 10 ist die erfindungsgemäße Vorrichtung ringförmig angeordnet. Sie läßt sich in zwei Abschnitte gliedern, nämlich eine Kupplung 20 einerseits und eine Bremse 30 andererseits, zwischen denen ein Schaltkolben 11 angeordnet ist.

Die Kupplung 20 umfaßt ein als Antrieb der Vorrichtung wirksames Schwungrad, von welchem lediglich ein Anschlußteil 21 mit einem Lamellenträger 22 erkennbar ist, an welchem hier eine Vielzahl von äußeren Kupplungslamellen 23 sitzen. Den äußeren Kupplungslamellen sind innere Kupplungslamellen 24 zugeordnet, die über Lamellenträger 25 an einem Nabenteil 26 sitzen. Der Nabenteil 26 ist drehfest mit der Welle

EP 0 481 206 A1

10 verbunden und setzt sich in einem analogen Nabenteil 36 im Bereich der Bremse 30 fort, wo ein entsprechender Lamellenaufbau vorliegt. Die wechselseitig ineinandergreifenden inneren und äußeren Lamellen 23, 24 sollen zusammenfassend als "Kupplungslamellen-Paket 23, 24" bezeichnet werden.

Die Bremse 30 umfaßt ein Bremsgehäuse 31, an welchem, über einen Lamellenträger 32 äußere Bremslamellen 33 sitzen, denen über einen Lamellenträger 35 am erwähnten Nabenteil 36 befindliche innere Bremslamellen 34 zugeordnet sind. Auch hier sollen die äußeren und inneren Bremslamellen 33, 34 nachfolgend kurz mit "Bremslamellen-Paket 33, 34" benannt werden. Das Bremsgehäuse 31 ist mittelbar oder unmittelbar mit dem Gestell der Maschine verbunden, um bei wirksamer Bremse 30 das Bremsmoment abstützen zu können.

An dem mit 40 bezeichneten Ende der Welle 10 ist ein nicht näher dargestellter Schleichgangantrieb angeordnet. Dieser besteht aus einem Antriebsmotor und einem Untersetzungsgetriebe, dessen Ausgangswelle durch eine Kupplung mit der Welle 10 wahlweise kuppelbar ist. Die Betätigung der Kupplung kann durch eine mit einem Druckmittel beaufschlagbare Kolben-Zylinder-Einheit erfolgen. Dieser Aufbau ist an sich bekannt.

Die beiden Nabenteile 26, 36 schließen miteinander einen Zylinder 12 für den bereits erwähnten Schaltkolben 11 ein. Ein Druckmittel 13, vorzugsweise Drucköl, wird durch axiale und radiale Kanäle 14 in den Zylinder 12 geleitet und bewegt den Schaltkolben 11 gegen die Wirkung von Rückstellfedern 15, 16, axial, im Sinne des Bewegungspfeils 27 gegen die Kupplung 20. Dadurch wird das Lamellen-Paket 23, 24 zusammengepreßt und es kommt zu einer Übertragung eines Antriebsmoments vom am Anschlußteil 21 befestigten Schwungrads auf die Welle 10. Der Schaltkolben 11 ist ein umlaufender Ringkolben, wie auch der Zylinder 12 ringförmig ausgebildet ist.

Demgegenüber sind die Rückstellfedern 15, 16 stellenweise angeordnet, die allerdings auch ringförmig um die Welle 10 herum verteilt sind. Dazu ist der im Bereich der Kupplung 20 vorgesehene Kupplungsteil 26 mit einer axialen Aussparung 28 versehen, in welcher die beiden als Federpaket ineinander steckenden wendelförmigen Rückstellfedern 15, 16 angeordnet sind. Diese Axialaussparung 28 ist auch von einem besonderen Stößel 17 durchsetzt, der mit seinem einen, flanschförmig verbreiterten Stirnende 18 unter der Wirkung der inneren Rückstellfeder 16 stets in kraftschlüssiger Anlage an den Schaltkolben 11 gehalten wird. Dadurch erhält man als erfindungswesentlichen Vorteile eine geräuscharme Arbeitsweise. Der Stößel 17 greift mit seinem gegenüberliegenden Stößelendstück 19 in eine axiale Bohrung 44 einer mit dem Nabenteil 26 fest verbundenen Endscheibe 29 ein, worin er längsverschieblich geführt ist. Der Stößel 17 wirkt zugleich als Führungsbolzen für die Federanordnung 15, 16. Beide wendelförmigen Rückstellfedern 15, 16 stützen sich an der Innenfläche der Endscheibe 29 ab, wobei die äußere Wendelfeder 15 gegenüberliegend unmittelbar am Schaltkolben 11 zur Anlage kommt. Beim Bewegen 27 des Schaltkolbens 11 wird der Stößel 17 ebenso im Sinne des Pfeils 45 mitgenommen, wie bei seiner durch den Pfeil 37 gekennzeichneten Bewegung in Gegenrichtung, die auf folgende Weise zustande kommt.

Wird die Zufuhr des Druckmittels 13 unterbunden, so wird der Schaltkolben 11 unter der Wirkung der Rückstellfedern 15, 16 in Gegenrichtung, im Sinne des Pfeils 37 zurückgestellt und drückt das Bremslamellen-Paket 33, 34 zusammen. Am gegenüberliegenden Ende des Lamellen-Pakets 33, 34 befindet sich eine mit dem dortigen Nabenteil 36 fest verbundene Endscheibe 39 als Widerlager. Jetzt kann ein Bremsmoment von der Welle 10 über das Bremsgehäuse 31 auf das Gestell ausgeübt werden.

Drehfest mit dem kupplungsseitigen Nabenteil 26 ist ein Anschlußstück 38 auf der Welle 10 montiert, das einen Zylinder 50 zur Aufnahme eines Zusatzkolbens 51 besitzt. Der Zusatzkolben 51 ist seinerseits mit einem axial herausragenden Führungszapfen 49 versehen, der dort in einer Gewindeaufnahme 53 eingeschraubt ist und damit in seiner herausragenden Länge einstellbar ist. Der Führungszapfen 49 ragt in die vorerwähnte Axialbohrung 44 der Endplatte 29 hinein. Zwischen der Stirnfläche 43 dieses Führungszapfens 49 einerseits und der gegenüberliegenden Stirnfläche 42 des in der Axialbohrung 44 befindlichen Stößelendes 19 andererseits befindet sich ein Spalt 41 definierter Spaltweite. Normalerweise ist der Zusatzkolben 51 zusammen mit seinem Führungszapfen 49 frei axialbeweglich. Ein Druckmittel 46 wird, ebenfalls durch axiale und radiale Kanäle 47 in der Welle 10, bis zum Anschlußstück 38 geführt und dort über Ergänzungskanäle 48 weitergeleitet, um den Kolben 51 im Sinne des Druckpfeils 52 zu beaufschlagen. In diesem Fall stößt der Zusatzkolben 51 an einer Schulter 54 der Endscheibe 29 an und der Führungszapfen 49 ragt mit seiner Stirnfläche 43 als starres Hindernis in die Axialbohrung 44 hinein. Das erfolgt, wenn der erwähnte Schleichgangantrieb 40 wirksam werden soll. Dazu liegen folgende Betriebsbedingungen vor.

Es wird gleichzeitig das Druckmittel 13 im Zylinder 12 wirksam, wodurch, wie bereits erwähnt wurde, der Schaltkolben 11 sich im Sinne des Pfeils 27 zu bewegen versucht, doch kann der Schaltkolben 11 dabei nicht in seine vorbeschriebene Endposition gelangen, um die Kupplung 20 wirksam zu setzen. Bei dieser Schaltbewegung 27 wird auch der Stößel 17 vom Schaltkolben 11 mitgenommen und im Sinn des Pfeils 45 bewegt, bis seine Stirnfläche 42 den vorerwähnten Spalt 41 schließt und an der Stirnfläche 43 des

4

Führungszapfens 49 zur Anlage kommt. Dadurch wird die durch den Pfeil 45 verdeutlichte Axialbewegung des Stößels 17 unterbrochen, der dabei als Gegenanschlag für den Führungszapfen 49 wirkt. Dadurch wird die Schaltbewegung 27 des Schaltkolbens 11 vorzeitig gestoppt und der Schaltkolben 11 kommt in einer Zwischenstellung zur Ruhe, die nachfolgend als "Schleichgangstellung" bezeichnet werden soll. Durch die eingeleitete Schaltbewegung 27 hat sich der Schaltkolben 11 auch von seiner gegenüberliegenden, die Bremse 30 wirksam setzenden Endlage entfernt; das Bremslamellen-Paket 33, 34 ist entlastet. In dieser Schleichgangstellung wird also weder ein Antriebsmoment auf Seiten der Kupplung 20 noch ein Bremsmoment auf Seiten der Bremse 30 übertragen. Der vorbeschriebene Schleichgangantrieb 40 kann, von der Kupplung 20 und der Bremse 30 ungestört, ausgeübt werden.

Erst wenn die Beaufschlagung mit dem Druckmittel 46 beendet wird und das Druckmittel aus dem Zusatzzylinder 50 frei abströmen kann, wirkt der Führungszapfen 49 nicht mehr als Hindernis, sondern läßt, wenn das Druckmittel 13 weiter wirksam ist, den Schaltkolben 11 bis zu seiner vollen kupplungsseitigen Endstellung weitergehen. Dann ist der Zusatzkolben 51 nachgiebig in seinem Zusatzzylinder 50 geführt und wird von der Stirnfläche 42 des Stößels 17 ganz eingedrückt. Der Kolben 51 lüftet von der als Schulter 54 wirkenden Außenfläche der Endscheibe 29. Alternativ, wenn auch das Druckmittel 13 den Zylinder 12 des Schaltkolbens 11 nicht mehr belastet, werden, wie bereits erwähnt wurde, die Rückstellfedern 15, 16 wirksam, die den Schaltkolben 11 in der Bewegungsrichtung 37 versetzen und die Bremse 30 schließen.

Für die Steuerung des Schaltkolbens 11 wird man zweckmäßigerweise das gleiche Druckmittel 13 wie beim Druckmittel 46 des Hilfskolbens 51 verwenden. Beide werden vom gleichen Druckmittelspeicher über Sicherheitsventile und einen Zuführkopf auf die Axialkanäle 14; 47 der Welle 10 übertragen. Im Falle einer Hydraulik als Druckmittel verwendet man zahlreiche Lamellen 33, 34; 23, 24, die vielfach paarweise zusammenwirken. Sofern ein pneumatischer Betrieb infrage kommt, genügen Einzellamellen 33, 34 bzw. 24, 23.

Bezugszeichenliste:

| | |
|---|---|
| 10 | Welle |
| 11 | Schaltkolben |
| 12 | Zylinder |
| 13 | Druckmittel |
| 14 | Kanal in 10 |
| 15 | äußere Rückstellfeder |
| 16 | innere Rückstellfeder |
| 17 | Stößel |
| 18 | Flanschende von 17 |
| 19 | Stößelendstück |
| 20 | Kupplung |
| 21 | Anschlußteil für Schwungrad |
| 22 | Lamellenträger für 23 |
| 23 | äußere Kupplungslamelle ) Kupplungslamellen-Paket |
| 24 | innere Kupplungslamelle ) |
| 25 | Lamellenträger für 24 |
| 26 | Nabenteil |
| 27 | Bewegungs-Pfeil von 11 |
| 28 | axiale Aussparung für 15, 16 |
| 29 | Endscheibe bei 20 |
| 30 | Bremse |
| 31 | Bremsgehäuse |
| 32 | Lamellenträger für 33 |
| 33 | äußere Bremslamelle ) Bremslamellen-Paket |
| 34 | innere Bremslamelle ) |
| 35 | Lamellenträger für 34 |
| 36 | Nabenteil |
| 37 | Bewegungs-Pfeil von 11 |
| 38 | Anschlußstück an 26 |
| 39 | Endscheibe bei 30 |
| 40 | Schleichgangantrieb |
| 41 | Spalt zwischen 42, 43 |
| 42 | Gegenstirnfläche von 17 |
| 43 | Stirnfläche von 49 |
| 44 | Axialbohrung |
| 45 | Verschiebungs-Pfeil von 17 |
| 46 | Druckmittel für 51 |
| 47 | Kanal für 46 |
| 48 | Ergänzungskanal in 38 |
| 49 | Führungszapfen |
| 50 | Zusatz-Zylinder |
| 51 | Zusatzkolben |
| 52 | Druckausübungs-Pfeil von 51 |
| 53 | Gewindeaufnahme für 49 |
| 54 | Schulter |

## Patentansprüche

1. Kombinierte Kupplungs- und Bremsvorrichtung an einer zum Betrieb einer Maschine, wie einer Presse, dienenden Welle (10), mit einem an der Welle angreifenden zusätzlichen Schleichgangantrieb (40), insbesondere für Pressen,

mit einem kupplungsseitigen sowie bremsseitigen Lamellen-Paket (33, 34), bestehend aus wenigstens einer in drehfester Verbindung mit der Welle (10) stehenden inneren Kupplungslamelle (24) bzw. inneren Bremslamelle einerseits und aus mindestens einer mit einem drehangetriebenen Schwungrad verbundenen äußeren Kupllungslamelle (23) bzw. einer mit dem Bremsgehäuse (31) verbundenen äußeren Bremslamelle (23) andererseits,

mit einem zwar drehfest aber axial verschiebbar auf der Welle gelagerten Schaltkolben (11), der, zur Übertragung eines Antriebs- bzw. Bremsmoments, zwischen den Kupplungs- und Bremslamellen-Paketen (33, 34) durch Druckmittelbetätigung einerseits und durch Rückstellfedern (15, 16) andererseits in zwei anpreßwirksame Endstellungen (Kupplungsstellung bzw. Bremsstellung) überführbar ist,

und mit einem Zusatzkolben (51), der druckmittelbeaufschlagt ist, um über die Welle (10) den Schleichgangantrieb (40) ausüben zu können,

**dadurch gekennzeichnet,**

daß der Schaltkolben (11) in eine dritte, mittlere Stellung (Schleichgangstellung) überführbar ist, in welcher er sowohl das Kupplungsals auch das Bremslamellen-Paket (23, 24; 33, 34) freigibt,

in der Schleichgangstellung sowohl der Zusatzkolben (51) als auch der Schaltkolben (11) druckmittelbeaufschlagt (13; 46) sind

und zwischen dem Schalt- und Zusatzkolben (11, 51) ein Anschlag (17, 49) angeordnet ist, der nur bei Druckmittelbeaufschlagung (46) des Zusatzkolbens (51) als starres Hindernis (43) in den Schaltbewegungs-Weg (27) des Schaltkolbens (11) hineinragt und den Schaltkolben (11) vor Erreichen der Endstellung stoppt.

2. Vorrichtung nach Anspruch 1, dadurch gekennzeichnet, daß die beiden Druckmittelräume des Schalt- und Zusatzkolbens (11; 51) in den beiden Zylindern (12; 50) voneinander weggerichtet sind und die beiden Kolben (11; 51) bei Druckbeaufschlagung (13; 46) zueinander antiparallel (27; 52) wirken.

3. Vorrichtung nach Anspruch 1 oder 2, dadurch gekennzeichnet, daß der Anschlag (17; 49) am Schaltkolben und/oder Zusatzkolben (11, 51) sitzt und einen axialen Spalt (41) einschließt, dessen bei druckmittelbetätigtem Zusatzkolben (51) anfallenden Spaltweite kleiner ausgebildet ist, als dem axialen Abstand der beiden Endstellungen des Schaltkolbens (11) entspricht.

4. Vorrichtung nach einem oder mehreren der Ansprüche 1 bis 3, dadurch gekennzeichnet, daß der Zusatzkolben (51) in axialem Abstand zum Schaltkolben (11) angeordnet ist und zwischen ihnen (11, 51) sich ein als Gegenanschlag fungierender Stößel (17) befindet.

5. Vorrichtung nach Anspruch 4, dadurch gekennzeichnet, daß der Stößel (17) zugleich ein Führungsbolzen für die Rückstellfeder (15, 16) ist.

6. Vorrichtung nach Anspruch 4 oder 5, dadurch gekennzeichnet, daß das eine Stößelende (18) kraftschlüssig (16), am Schaltkolben (11) anliegt.

7. Vorrichtung nach Anspruch 6, dadurch gekennzeichnet, daß das andere Stößelende (19) in einer Bohrung (44) der Vorrichtung verschieblich (45) geführt ist.

8. Vorrichtung nach Anspruch 7, dadurch gekennzeichnet, daß der Hilfskolben (51) einen als Anschlag fungierenden Führungszapfen (49) trägt, der in die Bohrung (44) des Stößels (17) eingreift und mit seiner Stirnfläche (43) den Spalt (41) mit der Gegenstirnfläche des dort aufgenommenen Stößelendes (19) einschließt.

9. Vorrichtung nach einem oder mehreren der Ansprüche 4 bis 8, dadurch gekennzeichnet, daß die wirksame axiale Länge des Stößels (17) bzw. der aus dem Stößel (17) und dem Führungszapfen (49) bestehenden Anschlagskombination einstellbar ist.

10. Vorrichtung nach einem oder mehreren der Ansprüche 1 bis 9, dadurch gekennzeichnet, daß das gleiche Druckmittel (46, 13) und vorzugsweise auch die gleiche Druckmittelsteuerung sowohl zur Betätigung des Schaltkolbens (11) als auch zur Beaufschlagung des Zusatzkolbens (51) dienen.

11. Vorrichtung nach Anspruch 10, dadurch gekennzeichnet, daß die Endstücke der zu den beiden Zylindern (12; 50) des Schalt- und Zusatzkolbens (11; 51) führenden Druckmittelkanäle (14; 47) im Inneren der Welle (10) verlaufen.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,P | DE-U-9 014 424 (ORTLINGHAUS-WERKE GMBH) <br> * das ganze Dokument * * <br> – – – | 1-11 | B 30 B 15/10 <br> F 16 D 67/04 |
| A,D | DE-A-3 424 539 (VEB KOMBINAT UMFORMTECHNIK "HERBERT WARNKE") <br> * das ganze Dokument * * <br> – – – | 1 | |
| A | DE-A-3 424 540 (VEB KOMBINAT UMFORMTECHNIK "HERBERT WARNKE") <br> * das ganze Dokument * * <br> – – – | 1 | |
| A | FR-A-2 303 994 (PRODAN, HELMUT BOHNE KG.) <br> * das ganze Dokument * * <br> – – – – – | 1 | |

|  |  |
|---|---|
| | **RECHERCHIERTE SACHGEBIETE (Int. Cl.5)** |
| | B 30 B <br> F 16 D |

**Der vorliegende Recherchenbericht wurde für alle Patentansprüche erstellt**

| Recherchenort | Abschlußdatum der Recherche | Prüfer |
|---|---|---|
| Den Haag | 16 Januar 92 | BRAEMS C.G.I. |